# EUROPÄISCHE PATENTSCHRIFT

(11) **EP 4 013 961 B1**
(45) Veröffentlichungstag und Bekanntmachung des Hinweises auf die Patenterteilung: **10.05.2023**
(21) Anmeldenummer: 20751099.1
(22) Anmeldetag: 29.07.2020
(51) Int. Cl.: F03D 13/25, F03D 80/80

(54) **SCHWIMMENDE WINDENERGIEANLAGE MIT INTEGRIERTEM UMSPANNWERK**
FLOATING WIND TURBINE COMPRISING AN INTEGRATED ELECTRICAL SUBSTATION
ÉOLIENNE FLOTTANTE COMPRENANT UNE SOUS-STATION ÉLECTRIQUE INTÉGRÉE

(30) Priorität: 16.08.2019 DE 102019122110
(43) Veröffentlichungstag der Anmeldung: 22.06.2022
(73) Patentinhaber: EnBW Energie Baden-Württemberg AG, 76131 Karlsruhe (DE)
(72) Erfinder: CHRISTIANSEN, Udo, 25938 Wyk auf Föhr (DE)
(74) Vertreter: DREISS Patentanwälte PartG mbB
(86) Internationale Anmeldenummer: PCT/EP2020/071337
(87) Internationale Veröffentlichungsnummer: WO 2021/032422

(56) Entgegenhaltungen:
- EP-A1- 2 221 474
- EP-A1- 2 811 159
- US-A1- 2010 194 115

## Beschreibung

Die Erfindung betrifft eine schwimmende Windenergieanlage, deren Integration in einen sogenannten Floating Offshore-Windpark und einen Floating Offshore-Windpark. Unter den Begriff "Floating Offshore-Windpark" fallen alle Offshore-Windparks, deren Windenergieanlagen nicht mittels einer Gründungsstruktur fest mit dem Meeresboden verbunden sind, sondern von einem oder mehreren Hohlkörpern getragen werden; diese Anordnung von Hohlkörpern wird im Zusammenhang mit der Erfindung auch als "schwimmendes Fundament" bezeichnet. Um das Abtreiben der Windenergieanlagen auf den schwimmenden Fundamenten zu verhindern, sind diese mittels Seilen oder Ketten mit dem Meeresboden verbunden.

Jedem Offshore-Windpark ist mindestens ein Umspannwerk zugeordnet, welches die von den Windenergieanlagen erzeugte elektrische Energie sammelt und auf eine für den "Transport" zum Festland geeignete Spannung transformiert. Zum Beispiel kann die Spannung von 66 kV auf 230 kV erhöht werden, um die Leitungsverluste und die erforderlichen Querschnitte der See- oder Exportkabel zu reduzieren. Es ist auch üblich, im Umspannwerk eine Blindstromkompensationseinrichtung für die Exportkabel vorzusehen. Diese nachfolgend auch als "Blindstromkompensation" bezeichnete Einrichtung wird im Zusammenhang mit der Erfindung als Teil des Umspannwerks angesehen.

Die Figur 1 der DE 20 12104 004 372 U1 beschreibt die Topologie eines Offshore Windparks bei dem die Windenergieanlagen mit Fundamenten im Meeresboden gegründet und befestigt sind. In einem der Fundamente ist ein Umspannwerk integriert. Die Umspannwerke des Windparks sind durch Hochspannungsdrehstromkabel direkt mit dem Übertragungsnetz an Land verbunden oder an eine Konverterstation angeschlossen, die eine Übertragung der elektrischen Energie mittels Hochspannungs-Gleichstrom auf das Festland ermöglicht. Für die Konverterstation ist ein separates Fundament vorgesehen.

Aus der WO 2019/106283 A1 ist ein relativ komplexes schwimmendes Fundament bekannt, dessen Hohlkörper einen Ring bilden. Weit unterhalb dieses Rings ist ein nicht schwimmfähiges Ballast-Gewicht vorhanden, das über Seile oder Ketten mit dem schwimmenden Fundament verbunden ist. Auch bei einem solchen schwimmenden Fundament kann die nachfolgend beschriebene Erfindung realisiert werden.

Aus der EP 2 811 159 A1 ist eine offshore-Windenergieanlage bekannt, umfassend ein Schwerkraftfundament aus Beton, das auch als schwimmfähige Wanne ausgebildet sein kann. In dieses Fundament ist ein Hohlkörper eingebunden, der Komponenten eines Umspannwerks aufnimmt.

Aus der US 2010/0194114 A1 ist eine offshore-Windenergieanlage bekannt bei der zumindest ein Teil der im Inneren eines Schwimmkörpers anfallenden Abwärme über die Außenwand des Schwimmkörpers an das umgebende Wasser abgegeben wird.

Aus der EP 2 221 474 A1 ist eine offshore-Windenergieanlage mit drei Schwimmkörpern, die mit Hilfe von Streben zu einer schwimmfähigen Struktur zusammengefügt werden. Auf zwei der drei Schwimmkörper sind Windenergiekonverter angeordnet. Der dritte Schwimmkörper nimmt elektrische Ausrüstung auf.

Aus der nachveröffentlichten WO 2020/ 001932 A1 ist eine offshore-Windenergieanlage bekannt, bei der Teile eines Umspannwerks als Ballast eingesetzt werden.

Der Erfindung liegt die Aufgabe zugrunde, eine schwimmende Windenergieanlage mit erweiterter Funktionalität bereitzustellen. Durch den Einsatz der erfindungsgemäßen Windenergieanlage sollen die Investitionskosten eines Floating Offshore-Windparks reduziert werden, ohne die Verfügbarkeit und die Jahres-Stromerzeugung des Windparks zu beeinträchtigen. Außerdem soll ein Floating Offshore-Windpark bereitgestellt werden, der weniger Platz bei gleicher Stromerzeugung benötigt.
Diese Aufgabe wird erfindungsgemäß bei einer Windenergieanlage umfassend einen Turm, eine auf dem Turm angeordnete Gondel und ein schwimmendes Fundament, wobei das schwimmende Fundament mindestens einen schwimmfähigen Hohlkörper umfasst, dadurch gelöst, dass in dem oder den Hohlkörpern des schwimmenden Fundaments ein Umspannwerk inklusive einer Blindstromkompensationseinrichtung, mindestens aber Teile eines Umspannwerks installiert sind. <A
Die Erfindung macht sich die Eigenschaft von Windenergieanlagen mit schwimmendem Fundament zu Nutze, dass der oder die Hohlkörper des schwimmenden Fundaments ein erhebliches Volumen aufweisen. Der oder die Hohlkörper sind bei herkömmlichen schwimmenden Fundamenten zum Teil mit Ballastwasser gefüllt. Der größere Teil des Volumens der Hohlkörper ist jedoch mit Luft gefüllt, um die erforderliche Auftriebskraft bereitzustellen. Dieses Volumen wird erfindungsgemäß als Einbauraum für ein groß dimensioniertes Umspannwerk inklusive einer Blindstromkompensationseinrichtung genutzt.

Dadurch ergibt sich ein erheblicher wirtschaftlicher Vorteil; ein separates Bauwerk allein nur für das Umspannwerk ist nicht notwendig. Dies reduziert die Gesamtkosten des Floating Offshore-Windparks signifikant. Außerdem kann bei vorgegebener Größer des Offshore-Windparks anstelle des auf einem separaten schwimmenden Fundament installierten Umspannwerks eine zusätzliche Windenergieanlage mit integriertem Umspannwerk betrieben werden. Dadurch erhöht sich die Jahresstromerzeugung des Windparks bei gleichem Flächenverbrauch signifikant.

Es hat sich als vorteilhaft erwiesen, wenn die wesentlichen Bauteile, insbesondere die schweren Bauteile des Umspannwerks, wie Transformator und Blindstromkompensationsspule, in einem Bereich des Hohlkörpers installiert werden, der sich während des Betriebs, d.h. wenn die Windenergieanlage schwimmt, unterhalb des Wasserspiegels befindet. Dann nämlich kann der Schwerpunkt der Windenergieanlage nach unten verlegt werden. Dadurch vergrößert sich die metazentrische Höhe der Windenergieanlage die Stabilität der schwimmenden Windenergieanlage verbessert sich. Darüber hinaus kann die Menge des erforderlichen Ballastwassers reduziert oder im Idealfall sogar in diesem Hohlkörper vollständig auf Ballastwasser verzichtet werden. Der vollstände Verzicht auf Ballastwasser in einen Hohlkörper vereinfacht die Integration eines Umspannwerks weiter.

In weiterer vorteilhafter Ausgestaltung der Erfindung sind die Bereiche des oder der Hohlkörper die während des Betriebs unterhalb der Wasseroberfläche liegen, als Kühlflächen ausgebildet. Diese Kühlflächen dienen zur Kühlung des Transformators und/oder der Blindstromkompensationsspule. Es ist beispielsweise möglich, dass der Hohlkörper bereichsweise als zweischalige Wandung ausgeführt ist und zwischen den beiden Schalen dieser Wandung Kühlwasser zur Kühlung der o. g. Stationen zirkuliert. Das Kühlwasser wird durch die Außenwand des Hohlkörpers von dem umgebenden Meerwasser gekühlt und kann damit die beim Betrieb des Transformators bzw. der Blindstromkompensationsspule anfallende Abwärme effizient abführen.

In konsequenter Weiterentwicklung und im Sinne einer noch weiteren Funktionsintegration können Teile des oder der Hohlkörper als Kapselung für Teile oder das gesamte Umspannwerk dienen. Beispielsweise ist es denkbar, dass der Hohlkörper als Kapselung für den Transformator und die Blindstromkompensationsspule des Umspannwerks ausgebildet ist. Dann dient die Wand des Hohlkörpers zusätzlich als Kühlfläche, so dass die am Transformator und der Blindstromkompensationsspule des Umspannwerks entstehende Abwärme unmittelbar über das Transformatoröl und die Wandung des Hohlkörpers an das umgebende Meerwasser übertragen wird. Ein separater Kühlwasserkreislauf kann entfallen.

In bevorzugter Ausgestaltung ist vorgesehen, dass die Wandung des Hohlkörpers aus Metall, bevorzugt aus Stahl hergestellt ist, so dass diese Wandung gleichzeitig die elektrische Abschirmung der Komponenten des Umspannwerks bildet. Auch dadurch werden weitere Baukosten eingespart, so dass sich die Wirtschaftlichkeit der Windenergieanlage bzw. des Windparks weiter erhöht.

Erfindungsgemäβ ist vorgesehen, dass auf der Eingangsseite des Umspannwerks mehrere separat steuerbare Leistungsschalter angeordnet sind. An jeden dieser Leistungsschalter wird ein Strang des erfindungsgemäßen Windparks angeschlossen. Die an einem Strang befindlichen Windenergieanlagen haben keine gesonderten Schalteinrichtungen, sondern werden gewissermaßen zentral über die steuerbaren Leistungsschalter in der auf der Eingangsseite des Umspannwerks geschaltet. Dies bedeutet, dass die in einen Strang integrierten Windenergieanlagen keine eigenen Schalteinrichtungen aufweisen. Alle Windenergieanlagen eines Strangs werden zentral über einen diesem Strang zugeordneten Leistungsschalter in der Windenergieanlage mit integriertem Umspannwerk geschaltet.

Dadurch ergeben sich nochmals reduzierte Gesamtkosten der anderen Windenergieanlagen. Beispielsweise wird für einen Strang mit drei Windenergieanlagen nur eine Schalteinrichtung benötigt. In der Praxis resultiert daraus zwar eine geringfügig verringerte Verfügbarkeit, da bei einem eventuellen Kabelfehler alle Windenergieanlagen in einem Strang ausfallen. Im Vergleich zu den aus dem Stand der Technik bekannten Anlagen fallen aber nur drei, statt bis zu zehn Anlagen aus. Das heißt konkret, dass zum Beispiel zwei funktionsfähige Windenergieanlagen kurzfristig außer Betrieb gehen, obwohl dies technisch gesehen nicht nötig wäre. Allerdings ist die Kostenersparnis durch den Verzicht auf jegliche Leistungsschalter in den Windenergieanlagen und die Verwendung kleinerer Kabelquerschnitte größer als die geringfügig reduzierte Verfügbarkeit dieser beiden Windenergieanlagen. Die Wartung aller Windenergieanlagen eines Strangs könnte gleichzeitig erfolgen.

Bei den aus dem Stand der Technik bekannten Anlagen mit bis zu 10 Anlagen in einem Strang und Schaltfeldern in jeder Windenergieanlage besteht das Risiko, dass wenn das Kabel direkt am Umspannwerk einen Fehler hat, alle zehn Anlagen ausfallen. Die Leistungsschalter in den Windenergieanlagen bringen keinen Vorteil.

In weiterer vorteilhafter Ausgestaltung der Erfindung umfasst das schwimmende Fundament mehrere Hohlkörper. In einem ersten Hohlkörper sind die Schaltanlage für die Parkverkabelung und der Transformator und in einem zweiten Hohlkörper sind die Blindstromkompensationsspule und das Schaltfeld für das Exportkabel integriert. Die Hohlkörper sind durch Streben miteinander verbunden. Diese Streben sind Rohre und können dazu genutzt werden, Leitungen zwischen dem Transformator und dem Hochspannungsschaltfeld zu führen. Dadurch ergibt sich eine weitere Kostenreduktion und Funktionsintegration.

In weiterer vorteilhafter Ausgestaltung der Erfindung weist der Hohlkörper, bzw. weisen die Hohlkörper, welche das Umspannwerk aufnehmen, Installations-Öffnungen auf. Diese Öffnungen sind wasserdicht verschließbar und so dimensioniert, dass durch die Öffnungen die Bauteile des Umspannwerks in den Hohlkörper eingehoben werden können.

Diese Öffnungen sind auf einer Höhe über dem Meeresspiegel angeordnet, dass sie Öffnungen gut mit einem Schiff erreicht werden können. Es ist auch möglich, einen Kran oder eine andere Hebevorrichtung an dem Turm oder dem schwimmenden Fundament anzubringen und zwar so, dass mit Hilfe der Hebevorrichtung die Komponenten des Umspannwerks in den Hohlkörper gehoben bzw. aus ihm herausgehoben werden können.

Die eingangs genannte Aufgabe wird auch bei einem Floating Offshore-Windpark, bestehend aus einer Vielzahl von Windenergieanlagen, welche über elektrische Leitungen mit mindestens einem auf See befindlichen Umspannwerk zur Netzanbindung verbunden sind, dadurch gelöst, dass eine der Windenergieanlagen eine Windenergieanlage mit integriertem Umspannwerk und/oder mit integrierter Blindstromkompensation nach einem der vorhergehenden Ansprüche ist, und dass mehrere Windenergieanlagen des Windparks an das Umspannwerk der Windenergieanlage mit integriertem Umspannwerk angeschlossen sind. Die Windenergieanlage, deren Fundament das Umspannwerk beherbergt, kann an einen der Stränge angeschlossen oder alternativ "einzeln" an das Umspannwerk angeschlossen werden.

Erfindungsgemäß werden nur so viele der umliegenden Windenergieanlagen mit einem Umspannwerk verbunden, dass die die Verbindung mit einem einheitlichen und relativ kleinen Kabelquerschnitt erfolgen kann. Zum Beispiel können drei, vier oder fünf Windenergieanlagen an ein Umspannwerk angeschlossen werden. Das ist eine Abkehr von der aus dem Stand der Technik bekannten Praxis, so viele Windenergieanlagen wie möglich (10 Stück oder mehr) zu einem Strang zusammenzuführen, um die Zahl der an das Umspannwerk anzuschließenden Kabel zu minimieren. Diese Praxis hat den Nachteil, dass die Querschnitte des Kabels umso größer werden, je näher man an das Umspannwerk herankommt, um die höhere Leistung übertragen zu können. Kabel mit großem Querschnitt sind teurer, schwerer, und schwieriger zu installieren. Bei den aus dem Stand der Technik bekannten Anlagen werden bis zu drei unterschiedliche Kabelquerschnitte verwandt. Das erhöht die Kosten für die Ersatzteilhaltung.

Erfindungsgemäß werden alle Windenergieanlagen eines Windparks mit nur einem Kabelquerschnitt an mehrere Umspannwerke angeschlossen, indem mehrere Stränge mit wenigen Windenergieanlagen realisiert werden. Die dazu geeigneten elektrischen Leitungen aus Aluminium sind relativ leicht und kostengünstig. Das trägt weiter zur erhöhten Wirtschaftlichkeit des erfindungsgemäßen Offshore Windparks bei.

Bei Offshore-Windparks mit großer Leistung, sind erfindungsgemäß mehrere kleine Umspannwerke in einem Offshore Windpark vorhanden, wobei die relativ kleinen Umspannwerke in die Hohlkörper einer oder mehrere Windenergieanlagen integriert werden. Dort sind sie vor der Witterung geschützt. Zusätzliche Bauwerke auf dem Fundament hätten eventuell Einfluss auf die Windenergieanlage und somit auch auf die Energieerzeugung. Daher ist es von Vorteil das Umspannwerk erfindungsgemäß direkt in das Fundament zu integrieren und den sehr großen zur Verfügung stehenden Bauraum innerhalb des Hohlkörpers zu nutzen.

Weil das erfindungsgemäße Umspannwerk ausreichend groß dimensioniert werden kann und kein Standort einer Windenergieanlage "geopfert" werden muss, kann der Standort des Umspannwerks bezüglich Leistung, Anschluss der Windenergieanlagen und Exportkabel optimal gewählt werden. Dadurch ergeben sich erhebliche Synergieeffekte.

In vorteilhafter Ausgestaltung des erfindungsgemäßen Floating Offshore-Windparks sind nur wenige Windenergieanlagen zu einem Strang geschaltet und jeder Strang ist in an einem der Leistungsschalter der Windenergieanlage mit integriertem Umspannwerk angeschlossen. Dabei werden die Windenergieanlagen bevorzugt derart zu einem Strang verbunden, dass möglichst alle im Floating Offshore Windpark verwendeten Kabel den gleichen, relativ kleinen Leiterquerschnitt haben.

In weiterer vorteilhafter Ausgestaltung sind genauso viele Windenergieanlagen an das Umspannwerk angeschlossen, dass nur ein Hochspannungsexportkabel und somit nur ein Transformator und eine Blindstromkompensationsspule eingesetzt werden. Derzeit bedeutet dies, abhängig von der Entfernung zum Festland, der Beschaffenheit des Meeresbodens und anderer Parameter, dass zwischen 300 und 250 MW über ein Hochspannungsexportkabel übertragen werden können.

Weitere Vorteile und vorteilhafte Ausgestaltungen der Erfindung sind der nachfolgenden Zeichnung, deren Beschreibung und den Patentansprüchen entnehmbar.

Es zeigen:
- Figur 1: Topologie eines erfindungsgemäßen Floating Offshore-Windparks,
- Figur 2: eine Windenergieanlage mit schwimmendem Fundament vom Typ Spar Buoy,
- Figur 3: eine Windenergieanlage mit schwimmendem Fundament vom Typ Halbtaucher,
- Figur 4: ein Querschnitt durch eine erfindungsgemäße Windenergieanlage mit integriertem Umspannwerk in einer Seitenansicht,
- Figur 5: das Ausführungsbeispiel gemäß Figur 4 in einer Ansicht von oben, und
- Figur 6: die Details zu der elektrischen Schaltung des Ausführungsbeispiels gemäß Figuren 4 und 5.

### Beschreibung der Ausführungsbeispiele

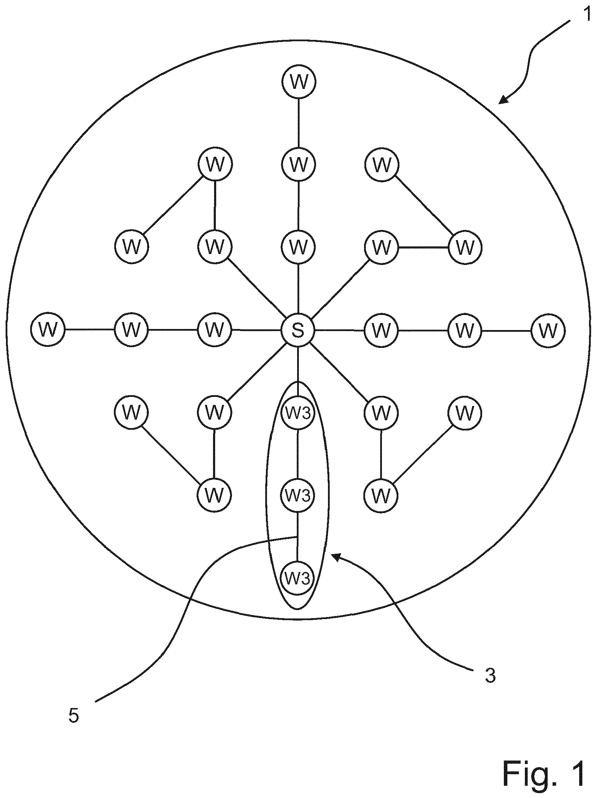

In der Figur 1 ist schematisiert und stark vereinfacht ein erfindungsgemäßer Floating Offshore-Windpark 1 dargestellt.

Dieser Windpark 1 umfasst eine Vielzahl von Windenergieanlagen W.

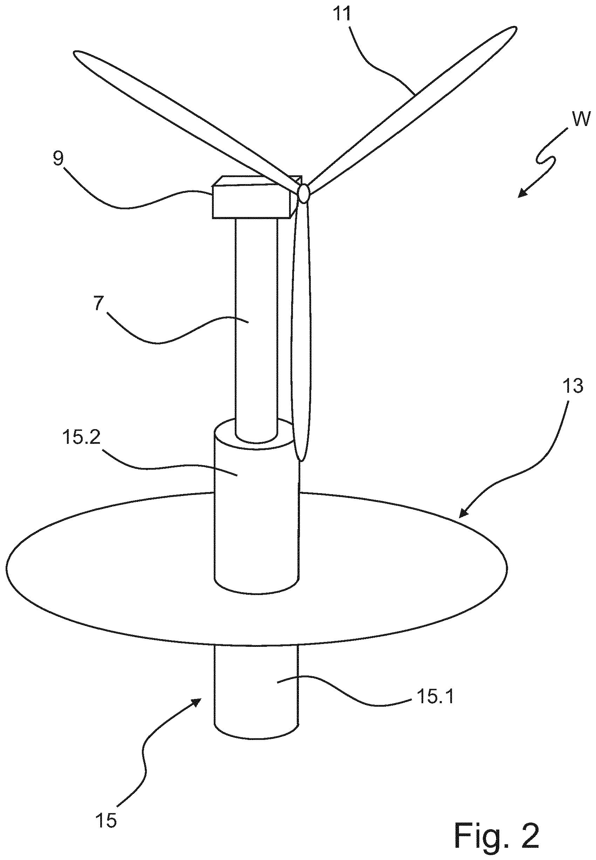

Die Windenergieanlage S mit integriertem Umspannwerk 14 unterscheidet sich von den anderen Windenergieanlagen W dadurch, dass in das Fundament der Windenergieanlage S ein Umspannwerk 14 integriert ist. Die Details dieser Integration werden nachfolgend anhand der Figuren 2 bis 5 nähe erläutert. Im Zusammenhang mit der Erfindung ist darauf hinzuweisen, dass jeweils drei Windenergieanlagen W zu einem Strang 3 zusammengefasst sind. Jeder Strang 3 endet in der Windenergieanlage mit integriertem Umspannwerk S. Die elektrische Verschaltung der einzelnen Stränge bzw. der Windenergieanlagen W an einem Strang wird nachfolgend noch im Detail erläutert.

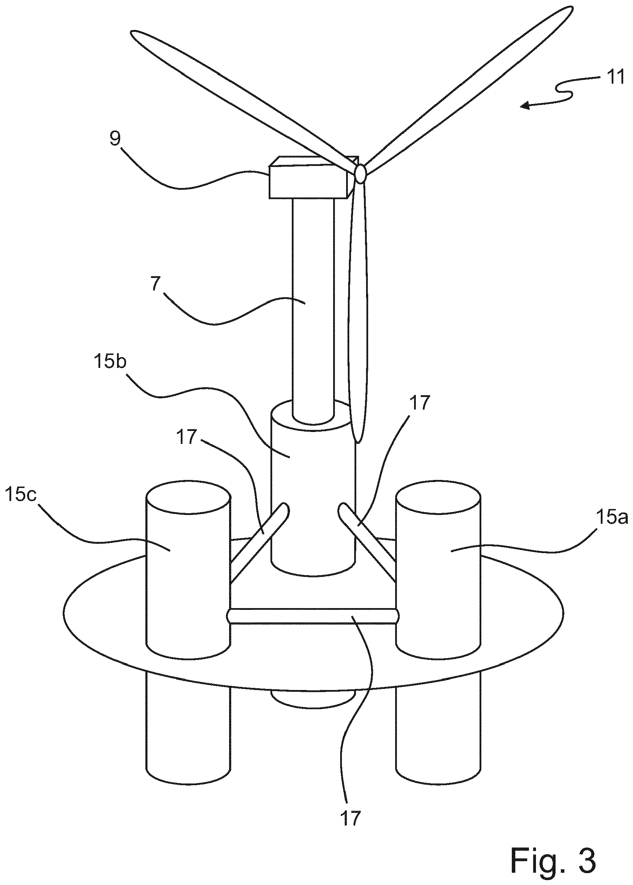

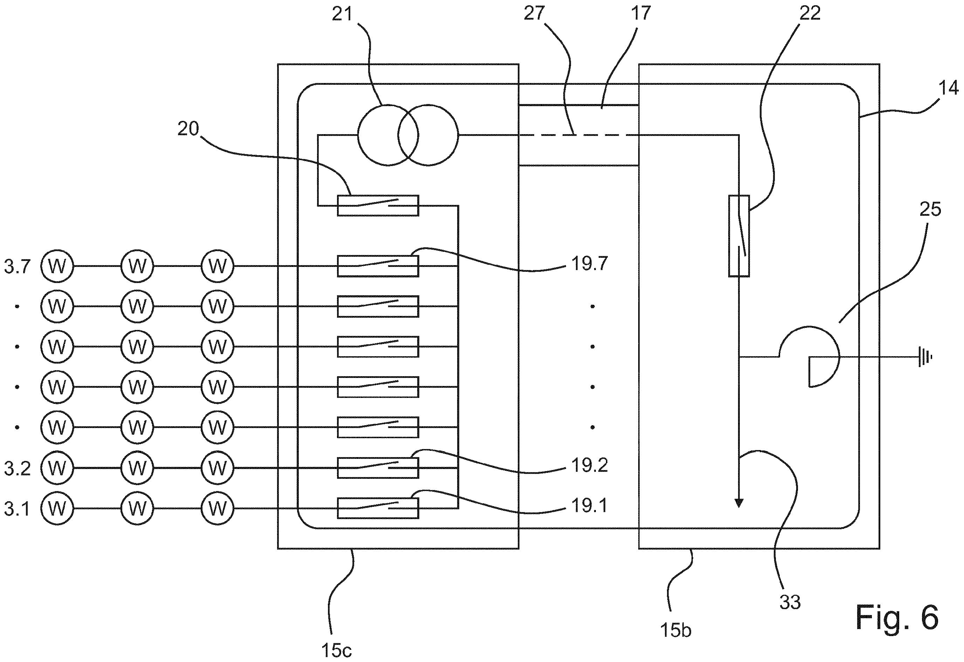

Die Zahl der Windenergieanlagen W an einem Strang 3 ist kleiner als 5, im dargestellten Beispiel ist sie gleich 3. Alle Stränge 3 münden in die Windenergieanlage S mit integriertem Umspannwerk und werden dort gesondert zu- bzw. abgeschaltet. Details dazu finden sich in der Figur 3 und werden im Zusammenhang mit der Figur 6 näher erläutert.

Über ein Kabel 5, welches die Windenergieanlagen W eines Strangs 3 miteinander verbindet, wird die von diesen Windenergieanlagen W erzeugte elektrische Energie zu dem Umspannwerk 14 der Windenergieanlage S mit integriertem Umspannwerk transportiert. Beispielhaft sind in der Figur 1 die Windenergieanlagen eines Strangs 3 mit W1, W2 und W3 bezeichnet.

Die von den Windenergieanlagen W1, W2 und W3 erzeugte elektrische Energie wird über ein gemeinsames Kabel 5 an das Umspannwerk 14 im Inneren der Windenergieanlage S transportiert. Daher können sie nur gemeinsam in Betrieb gehen oder außer Betrieb genommen werden. Wenn nämlich, aus welchen Gründen auch immer, der einem Strang zugeordnete Leistungsschalter 19 vor dem Umspannwerk 14 der Windenergieanlage S geöffnet ist, dann liefern alle drei Windenergieanlagen W1, W2 und W3 des betroffenen Strangs 3 keine elektrische Energie mehr ans das Umspannwerk 14 in der Windenergieanlage S.

Dieser vermeintliche "Nachteil" führt tatsächlich zu einem erheblichen wirtschaftlichen Vorteil, weil die Zahl der Leistungsschalter drastisch reduziert werden kann. Es muss nur pro Strang 3 ein Leistungsschalter 19 im Umspannwerk 14 vorgesehen sein und nicht, wie bei herkömmlichen Windparks, ein Leistungsschalter je Strang 3 und eine mehrfeldrige Schaltanlage je Windenergieanlage W. Daraus resultieren erhebliche Kostenvorteile. Weil in den Fundamenten bzw. den Türmen der Windenergieanlagen W keine Leistungsschalter untergebracht werden müssen, reduziert sich die Ausfallwahrscheinlichkeit der Windenergieanlagen.

Die Zahl der Windenergieanlagen an einem Strang 3 ist kleiner 5. Dadurch kann auch der Leitungsquerschnitt der Kabel 5 eines Strangs 3 noch relativ klein sein und es können leichte, kostengünstige und trotzdem leistungsfähige Aluminiumkabel eingesetzt werden.

Da die Windenergieanlagen W in der Regel nicht unvorhergesehen ausfallen, sondern lediglich im Sinne einer vorbeugenden Instandhaltung gewartet werden, ist es ohne weiteres möglich, alle Windenergieanlagen W eines Strangs 3 gleichzeitig außer Betrieb zu nehmen und die Wartung an allen Anlagen eines Strangs gleichzeitig durchzuführen. Die durch die Wartung bedingten Stillstandzeiten bleiben daher gleich, obwohl nur ein Leistungsschalter je Strang eingesetzt wird.

In der Figur 2 und 3 sind stark vereinfacht exemplarisch zwei verschiedene Bauarten von Windenergieanlagen W mit schwimmendem Fundament dargestellt. Die Windenergieanlage W umfasst einen Turm 7, eine Gondel 9. In der Gondel 9 ist der von dem Rotor 11 angetriebene Generator angeordnet. Am Fuß des Turms 7 ist dieser mit einem schwimmenden Fundament 13 verbunden.

In der Figur 2 handelt es sich um ein schwimmendes Fundament vom Typ Spar Buoy. Das schwimmende Fundament 13 dieser Bauart umfasst einen länglichen Hohlkörper 15. Der Bereich des Hohlkörpers 15, der sich unterhalb der Wasseroberfläche befindet ist mit 15.1 bezeichnet. Ein kleiner Teil 15.2 des Hohlkörpers 15 befindet sich oberhalb der Wasseroberfläche.

In der Figur 3 ist exemplarisch für alle sogenannten Halbtaucher ein zweites Ausführungsbeispiel einer Windenergieanlage mit schwimmendem Fundament 13 dargestellt. Bei dieser Ausführungsform sind drei Hohlkörper 15a, 15b und 15c zu einem Dreieck mit Hilfe von rohrförmigen Streben 17 verbunden. Auf einem der Hohlkörper, nämlich den Hohlkörper 15b, ist die Windenergieanlage mit Turm 7, Gondel 9 und Rotor 11 installiert. Die Hohlkörper 15a, 15b und 15c müssen nicht die gleichen Abmessungen und Geometrien haben.

Alle Hohlkörper 15, 15a, 15b und 15c haben ein sehr großes Volumen, da sie nicht nur das Gewicht der Windenergieanlage W tragen, sondern weil sie erhebliche Mengen an Ballastwasser aufnehmen, um die Windenergieanlage W zu stabilisieren.

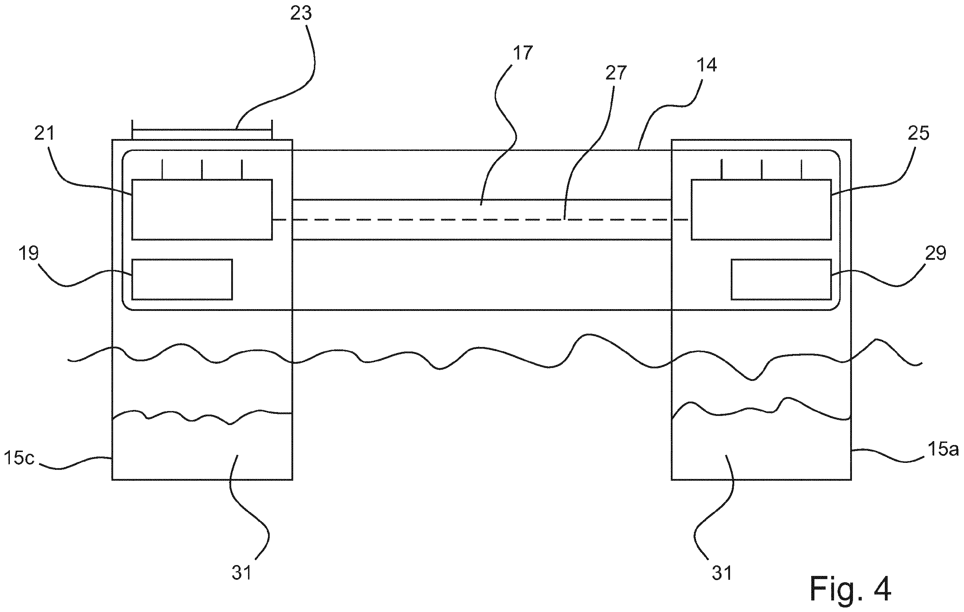

In der Figur 4 sind die beiden Hohlkörper 15a und 15c aus der Figur 3 im Schnitt und stark vereinfacht dargestellt. In dem Hohlkörper 15c sind verschiedene Leistungsschalter 19 vereinfacht als ein Block dargestellt. Wie bereits im Zusammenhang mit der Figur 1 erwähnt, gibt es für jeden Strang 3 einen Leistungsschalter mit dessen Hilfe die elektrische Verbindung zwischen einem Strang 3 und dem nachgeschalteten Transformator 21 unterbrochen bzw. hergestellt werden kann.

Die Kabel 5 der Stränge 3 und eine elektrische Verbindungsleitung zwischen den Leistungsschaltern 19 und dem Transformator 21 ist in der Figur 4 nicht dargestellt, da sie lediglich eine schematische Darstellung des erfindungsgemäßen Konzepts ist.

Auf der Oberseite des Hohlkörpers 15c ist eine verschließbare Montageöffnung 23 vorgesehen. Die Montageöffnung 23 ist so bemessen, dass auch die größte Komponente (das sind in der Regel der Transformator 21 und die Blindstromkompensationsspule 25) des Umspannwerks 14 durch die Montageöffnung 23 in den Hohlkörper 15c gehoben werden kann. Im Reparaturfall oder bei einem Austausch können alle Komponenten des Umspannwerks 14 durch die Montageöffnung 23 in den Hohlkörper 15c eingesetzt und bei Bedarf wieder herausgehoben werden.

Zwischen dem Hohlkörper 15c und dem Hohlkörper 15a ist exemplarisch eine Strebe 17 eingezeichnet. Diese Strebe 17 ist als Rohr ausgebildet, so dass sie gleichzeitig als Kabelkanal für die Kabel 27, welche den Transformator 21 mit dem Hochspannungsschaltfeld 29 verbinden, dienen kann.

Die Blindstromkompensation 25 ist über einen Hochspannungsschaltfeld 29 mit dem Hochspannungsexportkabel verbunden.

Über dieses Hochspannungs-Kabel wird die in dem Windpark 1 erzeugte elektrische Energie bei einer Spannung von beispielsweise 230 kV an das Festland übertragen.

Die Menge des Ballastwassers 31 in den Hohlkörpern 15 wird so bemessen, dass das schwimmende Fundament 13 ausreichend Tiefgang und eine ausreichende Massenträgheit hat, um eine stabile Lage der Windenergieanlage W, die auf dem schwimmendem Fundament 13 montiert ist, zu gewährleisten. Durch die erfindungsgemäße Integration eines Umspannwerks 14 in einen oder mehrere Hohlkörper 15 des schwimmenden Fundaments 13 erhöht sich die Masse innerhalb der Hohlkörper 15 und die Menge des Ballastwassers 31 kann entsprechend reduziert werden.

Es ist auch möglich, in dem Hohlkörper 15c, 15b in dem sich das Umspannwerk 14 befindet, vollständig auf Ballastwasser zu verzichten.

Anders als in der vereinfachten Darstellung in Figur 4 dargestellt, können die erfindungsgemäßen Einbauten, wie Leistungsschaler 19, Transformator 21 und Blindstromkompensation 25 auch unterhalb der Wasserlinie in den Hohlkörpern 15 installiert sein. Dadurch ergibt sich eine niedrigere Lage des Schwerpunkts und in Folge dessen eine größere metazentrische Höhe, was die SchwimmStabilität des Fundaments 13 erhöht.

Die unteren Bereiche 15.1 der Hohlkörper 15, die in das Meerwasser eintauchen, werden durch das Meerwasser gekühlt, so dass die im Umspannwerk 14 entstehende Abwärme teilweise direkt über die Außenwände des Hohlkörpers 15 an das Meerwasser abgeführt werden können. Der Hohlkörper 15 kann auch so gestaltet werden, dass er gleichzeitig die Kapselung des Umspannwerks bzw. des Transformators 21 und/oder der Blindstromkompensationsspule 25 bildet. Dann wird gewissermaßen ohne zusätzliches Bauteil ein direkter Wärmeaustausch zwischen dem Transformatoröl der Transformatoren 21, der Blindleistungskompensationsspule 25 und dem Meerwasser ermöglicht. Die Baukosten werden reduziert und eine sehr effektive Wärmeabfuhr ist gewährleistet.

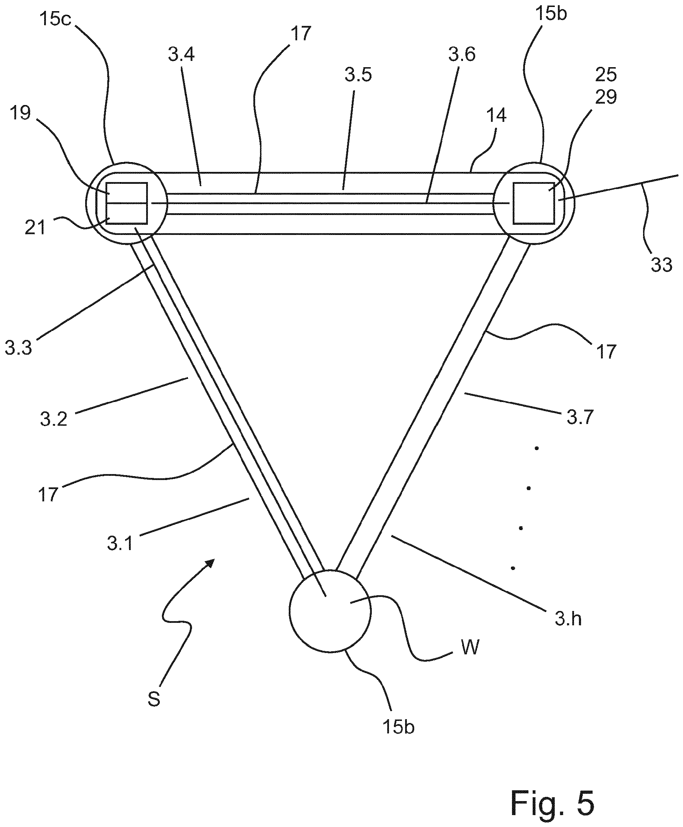

In der Figur 5 ist die Ansicht auf das Ausführungsbeispiel gemäß der Figur 3 nochmal von oben dargestellt. Daraus lässt sich die Aufteilung der verschiedenen Komponenten, nämlich Windenergieanlage W, Umspannwerk 14 mit dem Transformator 21, den Leistungsschaltern 19, der Blindstromkompensation 25 und dem Hochspannungs-Leistungsschalter 29 auf die drei Hohlkörper 15a 15b und 15c gut erkennen.

Aus dieser Darstellung wird deutlich, dass die Stränge 3.1 bis 3.n zu der Windenergieanlage S mit integriertem Umspannwerk 14 geführt werden. Am Ausgang der Blindstromkompensationsspule 25 ist eine Hochspannungsleitung 33 dargestellt. Über sie wird die in dem Windpark 1 erzeugte elektrische Energie auf das Festland transportiert.

In der Figur 6 sind etwas detaillierter, die elektrischen Komponenten in den Hohlkörpern 15c und 15b und deren elektrische Verbindung dargestellt. In dem Hohlkörper 15c werden insgesamt sieben Stränge 3.1 bis 3.7 mit jeweils drei Windenergieanlagen W an die Schaltanlage 19 angeschlossen. Zusätzlich ist noch ein Hauptschalter 20 vorgesehen, der die Eingangsseite des Transformators 21 mit den Schaltanlagen 19 der Stränge 3.1 bis 3.7 verbinden oder trennen kann.

Das Umspannwerk 14 umfasst einen Transformator, der die von den Windenergieanlagen erzeugte elektrische Energie auf 230 kV transformiert. Dieser Wechselstrom wird über das Kabel 27 zu dem Hochspannungsschaltfeld 29 geführt. Das Schaltfeld 29 dient der Verbindung und Trennung des Hochspannungsexportkabels und gleichzeitig der Verbindung von Blindstromkompensationsspule 25 mit dem Exportkabel 33.

## Patentansprüche

1. Windenergieanlage (S) umfassend mindestens einen Rotor (11) und ein schwimmendes Fundament (13), wobei das schwimmende Fundament (13) mindestens einen schwimmfähigen Hohlkörper (15) umfasst, wobei in dem oder den Hohlkörpern (15, 15a, 15b, 15c) des schwimmenden Fundaments (13) ein Umspannwerk (14), mindestens aber Teile eines Umspannwerks (14) installiert sind, wobei auf der Eingangsseite des Umspannwerks (14) mehrere separat steuerbare Leistungs-Schalter (19.1, 19.2, ..., 19.n, 22) angeordnet sind.

2. Windenergieanlage (S) nach Anspruch 1, **dadurch gekennzeichnet, dass** mindestens Teile des Umspannwerks (14) in den Bereichen (15.1) des oder der Hohlkörper (15, 15a, 15b, 15c) installiert sind, die unterhalb der Wasseroberfläche liegen.

3. Windenergieanlage (S) nach Anspruch 1 oder 2, **dadurch gekennzeichnet, dass** die Bereiche (15.1) des oder der Hohlkörper (15, 15a, 15b, 15c), die während des Betriebs unterhalb der Wasseroberfläche liegen, als Kühlfläche ausgebildet sind, und dass die Kühlflächen zur Kühlung des Transformators (21) und/oder der Blindstromkompensationsspule (25) dient.

4. Windenergieanlage (S) nach einem der vorhergehenden Ansprüche, **dadurch gekennzeichnet, dass** Teile des oder der Hohlkörper (15, 15a, 15b, 15c) als Kapselung für einen Teil der Hochspannung führenden elektrischen Baugruppen von Umspannwerk (14) ausgebildet sind.

5. Windenergieanlage (S) nach einem der vorgenannten Ansprüche, **dadurch gekennzeichnet, dass** die Hohlkörper (15, 15a, 15b, 15c) aus Metall sind und die elektrischen Komponenten des Umspannwerks (14) abschirmen.

6. Windenergieanlage (S) nach einem der vorhergehenden Ansprüche, **dadurch gekennzeichnet, dass** das schwimmende Fundament (13) einen oder mehrere Hohlkörper (15, 15a, 15b, 15c) umfasst, dass in einem ersten Hohlkörper (15.c) der/ein Transformator (21) und die Leistungsschalter (19) für die Stränge (3) und in einem zweiten Hohlkörper (15.b) die Blindstromkompensationsspule (25) und das Hochspannungsschaltfeld (29) angeordnet sind, dass der erste Hohlkörper (15.a) und der zweite Hohlkörper (15.b) durch eine oder mehrere Streben (17) miteinander verbunden sind, und dass in mindestens einer der Streben (17) die Kabel (27) verlegt sind, welche den Transformator (21) und das Hochspannungsschaltfeld (29) elektrisch verbinden.

7. Windenergieanlage nach einem der vorhergehenden Ansprüche, **dadurch gekennzeichnet, dass** der das Umspannwerk (14) aufnehmende Hohlkörper und/oder der die Blindstromkompensationsspule (25) aufnehmende Hohlkörper (15c, 15b) verschließbare Öffnungen (23) aufweisen, und dass sich diese Öffnungen (23) oberhalb der Wasseroberfläche befinden.

8. Windenergieanlage nach Anspruch 7, **dadurch gekennzeichnet, dass** die verschließbare Öffnung (23) mindestens einen Meter, bevorzugt mehr als 2 Meter über der Wasseroberfläche befinden.

9. Windenergieanlage nach einem der vorhergehenden Ansprüche, **dadurch gekennzeichnet, dass** jeder Rotor (11) in einer Gondel (9) gelagert ist, dass die Gondel (9) auf einem Turm (7) angeordnet ist.

10. Windenergieanlage nach einem der vorhergehenden Ansprüche, **dadurch gekennzeichnet, dass** eine Drehachse des oder der Rotoren (11) horizontal oder vertikal verläuft.

11. Windenergieanlage nach einem der vorhergehenden Ansprüche, **dadurch gekennzeichnet, dass** sie einen Rotor mit einem Flügel, zwei Flügeln oder drei Flügeln, einen Darrieus-Rotor, einen Savonius-Rotor aufweist oder eine Kite-Windenergieanlage ist.

12. Floating Offshore-Windpark (1), bestehend aus einer Vielzahl von Windenergieanlagen, welche über elektrische Leitungen/Kabel mit mindestens einem auf See befindlichen Umspannwerk verbunden sind, **dadurch gekennzeichnet, dass** eine der Windenergieanlagen (S) eine Windenergieanlage nach einem der vorhergehenden Ansprüche ist, und dass die Windenergieanlagen (W, S) an das Umspannwerk (14) der Windenergieanlage (S) mit integriertem Umspannwerk (14) angeschlossen ist.

13. Floating Offshore-Windpark (1) nach Anspruch 12, **dadurch gekennzeichnet, dass** mehrere Windenergieanlagen (W, S) zu einem Strang (3) zusammengeschaltet sind, und dass jeder Strang (3) an einem der Leistungs-Schalter (19, 19.1,... 19.n) der Windenergieanlage (W, S) mit integriertem Umschaltwerk (S) angeschlossen ist.

14. Floating Offshore-Windpark (1) nach Anspruch 13, **dadurch gekennzeichnet, dass** weniger als fünf (5) Windenergieanlagen (W, S) zu einem Strang (3) zusammengeschaltet sind.

15. Floating Offshore-Windpark (1) nach einem der Ansprüche 12 bis 14, **dadurch gekennzeichnet, dass** nur so viele Windenergieanlagen an ein Umspannwerk (14) angeschlossen werden, dass die gesamte Energie über nur ein Hochspannungsexportkabel (33) auf das Festland übertragen werden kann.

## Claims

1. Wind turbine plant (S) comprising at least one rotor (11) and a floating base (13), wherein the floating base (13) comprises at least one buoyant hollow body (15), wherein a transformer station (14), but at least parts of a transformer station (14), are installed in the hollow bodies (15, 15a, 15b, 15c) of the floating base (13), wherein a plurality of separately controllable circuit breakers (19.1, 19.2, ... , 19.n, 22) are arranged on the input side of the transformer station (14).

2. Wind turbine plant (S) according to claim 1, **characterised in that** at least parts of the transformer station (14) are installed in the regions (15.1) of the hollow body or bodies (15, 15a, 15b, 15c) which lie below the water surface.

3. Wind turbine plant (S) according to claim 1 or 2, **characterised in that** the regions (15.1) of the hollow body or bodies (15, 15a, 15b, 15c) which lie below the water surface during operation are designed as cooling surfaces, and that the cooling surfaces are used to cool the transformer (21) and/or the reactive current compensation coil (25).

4. Wind turbine plant (S) according to one of the preceding claims, **characterised in that** parts of the hollow body (15, 15a, 15b, 15c) are designed as encapsulation for a part of the high voltage carrying electrical assemblies of the transformer station (14).

5. Wind turbine plant (S) according to one of the preceding claims, **characterised in that** the hollow bodies (15, 15a, 15b, 15c) are made of metal and shield the electrical components of the transformer station (14).

6. Wind turbine plant (S) according to one of the preceding claims, **characterised in that** the floating base (13) comprises one or more hollow bodies (15, 15a, 15b, 15c), that the/a transformer (21) and the circuit breakers (19) for the trains (3) are arranged in a first hollow body (15.c) and the reactive current compensation coil (25) and the high-voltage switchgear panel (29) are arranged in a second hollow body (15.b), that the first hollow body (15.a) and the second hollow body (15.b) are connected by one or more struts (17), and that the cables (27) are laid in at least one of the struts (17) which electrically connect the transformer (21) and the high-voltage switchgear (29).

7. Wind turbine plant according to one of the preceding claims, **characterised in that** the hollow body accommodating the transformer station (14) and/or the hollow body (15c, 15b) accommodating the reactive current compensation coil (25) have sealable openings (23), and that these openings (23) are located above the water surface.

8. Wind turbine plant according to claim 7, **characterised in that** the sealable opening (23) is located at least one metre, preferably more than 2 metres above the water surface.

9. Wind turbine plant according to one of the preceding claims, **characterised in that** each rotor (11) is mounted in a nacelle (9), that the nacelle (9) is arranged on a tower (7).

10. Wind turbine plant according to one of the preceding claims, **characterised in that** an axis of rotation of the rotor(s) (11) is oriented horizontally or vertically.

11. Wind turbine plant according to one of the preceding claims, **characterised in that** it has a rotor with one blade, two blades or three blades, a darrieus rotor, a savonius rotor or is a kite turbine.

12. Floating offshore wind farm (1), consisting of a plurality of wind turbine plants connected via electrical lines/cables to at least one transformer station located at sea, **characterised in that** one of the wind turbine plants (S) is a wind turbine plant according to one of the preceding claims, and that the wind turbine plants (W, S) are connected to the transformer station (14) of the wind turbine plant (S) with integrated transformer station (14).

13. Floating offshore wind farm (1) according to claim 12, **characterised in that** a plurality of wind turbine plants (W, S) are interconnected to form a train (3), and that each train (3) is connected to one of the circuit breakers (19, 19.1, ... 19.n) of the wind turbine plant (W, S) with integrated switching unit (S).

14. Floating offshore wind farm (1) according to claim 13, **characterised in that** fewer than five (5) wind turbine plants (W, S) are connected to form a train (3).

15. Floating offshore wind farm (1) according to one of the claims 12 to 14, **characterised in that** only so many wind turbine plants are connected to a transformer station (14) that all the energy can be transmitted to the mainland via only one high-voltage export cable (33).

## Revendications

1. Centrale éolienne (S) comprenant au moins un rotor (11) et une fondation flottante (13), dans laquelle la fondation flottante (13) comprend au moins un corps creux flottant (15), dans laquelle un poste de transformation (14) ou au moins des parties d'un poste de transformation (14) est/sont installées dans le ou les corps creux (15, 15a, 15b, 15c) de la fondation flottante (13), dans laquelle plusieurs commutateurs de puissance (19.1, 19.2,..., 19.n, 22) pouvant être commandés séparément sont agencés du côté entrée du poste de transformation (14).

2. Centrale éolienne (S) selon la revendication 1, **caractérisée en ce qu'**au moins des parties du poste de transformation (14) sont installées dans les régions (15.1) du ou des corps creux (15, 15a, 15b, 15c) qui se trouvent sous la surface de l'eau.

3. Centrale éolienne (S) selon la revendication 1 ou 2, **caractérisée en ce que** les régions (15.1) du ou des corps creux (15, 15a, 15b, 15c) qui se trouvent sous la surface de l'eau pendant le fonctionnement sont réalisées sous forme de surfaces de refroidissement, et **en ce que** les surfaces de refroidissement servent au refroidissement du transformateur (21) et/ou de la bobine de compensation de courant réactif (25).

4. Centrale éolienne (S) selon l'une quelconque des revendications précédentes, **caractérisée en ce que** des parties du ou des corps creux (15, 15a, 15b, 15c) sont réalisées sous forme de capsule pour une partie des modules électriques de poste de transformation (14) conduisant la haute tension.

5. Centrale éolienne (S) selon l'une quelconque des revendications précédentes, **caractérisée en ce que** les corps creux (15, 15a, 15b, 15c) sont en métal et protègent les composants électriques du poste de transformation (14).

6. Centrale éolienne (S) selon l'une quelconque des revendications précédentes, **caractérisée en ce que** la fondation flottante (13) comprend un ou plusieurs corps creux (15, 15a, 15b, 15c), **en ce que** le/un transformateur (21) et les disjoncteurs de puissance (19) destinés aux lignes (3) sont agencés dans un premier corps creux (15.c) et la bobine de compensation de courant réactif (25) et le tableau de distribution haute tension (29) sont agencés dans un deuxième corps creux (15.b), **en ce que** le premier corps creux (15.a) et le deuxième corps creux (15.b) sont reliés l'un à l'autre par une ou plusieurs entretoise(s) (17), et **en ce que** les câbles (27) qui relient électriquement le transformateur (21) et le tableau de distribution haute tension (29) sont installés dans au moins une des entretoises (17).

7. Centrale éolienne selon l'une quelconque des revendications précédentes, **caractérisée en ce que** le corps creux accueillant le poste de transformation (14) et/ou le corps creux (15c, 15b) accueillant la bobine de compensation de courant réactif (25) présentent des orifices obturables (23), et **en ce que** lesdits orifices (23) se trouvent au-dessus de la surface de l'eau.

8. Centrale éolienne selon la revendication 7, **caractérisée en ce que** l'orifice obturable (23) est situé à au moins un mètre, de manière préférée plus de 2 mètres, au-dessus de la surface de l'eau.

9. Centrale éolienne selon l'une quelconque des revendications précédentes, **caractérisée en ce que** chaque rotor (11) est logé dans une nacelle (9), et **en ce que** la nacelle (9) est agencée sur un mât (7).

10. Centrale éolienne selon l'une quelconque des revendications précédentes, **caractérisée en ce qu'**un axe de rotation du ou des rotor(s) (11) s'étend horizontalement ou verticalement.

11. Centrale éolienne selon l'une quelconque des revendications précédentes, **caractérisée en ce qu'**elle présente un rotor avec une aile, deux ailes ou trois ailes, un rotor de Darrieus, un rotor de 5avonius ou **en ce qu'**elle est une centrale éolienne aéroportée.

12. Parc éolien flottant en mer (1), constitué d'une pluralité de centrales éoliennes reliées par des lignes/câbles électriques à au moins un poste de transformation se trouvant en mer, **caractérisé en ce qu'**une des centrales éoliennes (S) est une centrale éolienne selon l'une quelconque des revendications précédentes, et **en ce que** les centrales éoliennes (W, S) sont raccordées grâce à un poste de transformation intégré (14) au poste de transformation (14) de la centrale éolienne (S).

13. Parc éolien flottant en mer (1) selon la revendication 12, **caractérisé en ce que** plusieurs centrales éoliennes (W, S) sont commutées ensemble de manière à former une ligne (3), et **en ce que** chaque ligne (3) est raccordé grâce à un poste de transformation intégré (S) à un des interrupteurs de puissance (19, 19.1,... 19.n) de la centrale éolienne (W, S).

14. Parc éolien flottant en mer (1) selon la revendication 13, **caractérisé en ce que** moins de cinq (5) centrales éoliennes (W, S) sont commutées ensemble de manière à former une ligne (3).

15. Parc éolien flottant en mer (1) selon l'une quelconque des revendications 12 à 14, **caractérisé en ce que** des éoliennes ne sont raccordées à un poste de transformation (14) qu'en quantité nécessaire pour que toute l'énergie puisse être transmise au continent par l'intermédiaire d'un seul câble d'exportation haute tension (33).
